# EUROPÄISCHE PATENTSCHRIFT

(11) **EP 0 685 927 B1**
(45) Veröffentlichungstag und Bekanntmachung des Hinweises auf die Patenterteilung: **21.01.1998**
(21) Anmeldenummer: 95106825.3
(22) Anmeldetag: 05.05.1995
(51) Int. Cl.: H02P 6/22

(54) **Verfahren zum Bremsen eines invers drehenden, an einem Gleichspannungsnetz betriebenen Synchronmotors**
Braking method for an inverse rotating synchronous motor powered by a direct current network
Méthode de freinage pour un moteur synchrone tournant inversement actionné par un réseau à cc

(30) Priorität: 03.06.1994 DE 4419351
(43) Veröffentlichungstag der Anmeldung: 06.12.1995
(73) Patentinhaber: ROBERT BOSCH GMBH, 70442 Stuttgart (DE)
(72) Erfinder: Wehberg, Josef, Dipl. Ing., D-77815 Buehl (DE); Soellner, Michael, Dipl. Ing., D-77836 Rheinmuenster (DE); Krauth, Wolfgang, D-77855 Achern-Sasbachried (DE)

(56) Entgegenhaltungen:
- EP-A- 0 316 716
- FR-A- 2 590 423

## Beschreibung

Die Erfindung betrifft ein Verfahren zum Bremsen eines invers drehenden, an einem Gleichspannungsnetz betriebenen Synchronmotors nach dem Oberbegriff des Anspruchs 1.

### Stand der Technik

Elektronisch kommutierte, an einem Gleichspannungsnetz betriebene Synchronmotoren sind bekannt. Diese Synchronmotoren besitzen einen einen Permanentmagneten tragenden Läufer und eine über dem Umfang des Ständers versetzt angeordnete mehrphasige Ankerwicklung. Die Wicklungsstränge der Ankerwicklung sind über Schaltmittel, beispielsweise Leistungs-Feldeffekttransistoren, mit einer Betriebsspannung verbindbar. Die Ansteuerung der Wicklungsstränge, das heißt, deren abwechselnde Verbindung (Kommutierung) mit der Betriebsspannung, muß in Abhängigkeit von der Läuferstellung erfolgen, damit der selbständige Betrieb des Motors gewährleistet ist. Die Lagebestimmung des Läufers kann dabei über diskrete Sensoren, beispielsweise Hallelemente, Lichtschranken und ähnliches erfolgen. Weiterhin ist bekannt, die Stellung des Läufers über die in den Wicklungssträngen aufgrund der Rotation des Permanentmagneten-Läufers induzierten Spannungen zu erkennen. Die induzierten Spannungen werden hierbei elektronisch ausgewertet, um bei Erreichen bestimmter Kommutierungsbedingungen, beispielsweise indem die Spannung einen bestimmten Schwellwert überschreitet, eine entsprechende Kommutierung der Wicklungsstränge über die Schaltmittel zu erreichen. Derartige elektronisch kommutierte Synchronmotoren werden aufgrund ihres kleinen Aufbaus häufig in Kraftfahrzeugen, beispielsweise als Heiz- und/oder Klimagebläsemotoren, eingesetzt. Hierbei ist jedoch nachteilig, daß im abgeschalteten Zustand der Motoren diese über auf der Läuferwelle befestigte Lüfterräder invers drehen können. Die Inversdrehung des Motors kann beispielsweise durch einen Staudruck und/oder Luftströmungen im Kraftfahrzeug bewirkt werden. Da dem Läufer eines elektronisch kommutierten Synchronmotors aufgrund fehlender Bürsten nur eine geringe Reibung, die sich ausschließlich aus einem Luftwiderstand und einer Lagerreibung zusammensetzt, entgegengesetzt wird, kann dieser bis zu seiner Maximaldrehzahl invers drehen. Soll nun ein invers drehender Motor eingeschaltet werden, damit dieser beispielsweise ein Gebläse in Betrieb setzt, ist es sehr nachteilig, daß der Motor, je nachdem welche Stellung der Läufer gerade aufweist, entweder drehrichtig oder entgegengesetzt der Solldrehrichtung hochläuft.

### Vorteile der Erfindung

Das erfindungsgemäße Verfahren mit den im Anspruch 1 genannten Merkmalen bietet demgegenüber den Vorteil, daß ein aufgrund äußerer Einflüsse invers drehender Synchronmotor zu jedem beliebigen Einschaltzeitpunkt aus seiner Inversdrehung in Stillstand abgebremst wird und dieser dann anschließend in Solldrehrichtung hochläuft. Dadurch, daß eine während der Inversdrehung des Rotors in den Wicklungssträngen des Stators induzierte Spannung mit einem Schwellwert verglichen wird und in Abhängigkeit des Vergleichs eine definierte Bestromung der Wicklungsstränge erfolgt, ist es vorteilhaft möglich, den Rotor aus jeder beliebigen Inversdrehung, das heißt, insbesondere von jeder beliebigen Drehzahl, exakt auf eine bestimmte Rotorstellung abzubremsen und aus dieser den drehrichtigen Hochlauf zu starten. Dadurch, daß vorzugsweise der Vergleich der induzierten Spannung mit dem Schwellwert zum Zeitpunkt eines geplanten Einschaltens des Synchronmotors erfolgt, ist eine unmittelbare mit der geplanten Inbetriebsetzung des Motors zeitnahe Abbremsung und anschließende drehrichtungsrichtige Funktion des Synchronmotors gewährleistet. Hierdurch ist eine Verbesserung der Zuverlässigkeit des Synchronmotors beziehungsweise des durch den Synchronmotor angetriebenen Aggregats in ihren Betriebsverhalten möglich.

In weiterer vorteilhafter Ausgestaltung der Erfindung ist vorgesehen, daß eine Kommutierungsschaltung und die Kommutierungsbedingungen für einen Korrektlauf und den Inverslauf identisch sind, so daß die Messung der induzierten Spannungen in den Wicklungssträngen während der Inversdrehung durch die Kommutierungsvorrichtung erfolgt, die bei drehrichtigem Betrieb des Synchronmotors die Stellung des Läufers ermittelt, um eine stellungsabhängige Kommutierung der Wicklungsstränge durchzuführen. Somit sind mit dem erfindungsgemäßen Verfahren keine zusätzlichen Bauelemente erforderlich, die zu einer Verkomplizierung des Aufbaus des Synchronmotors beziehungsweise dessen Kommutierungsvorrichtung führen würden. Weiterhin ist keine Umschaltung der Kommutierungsvorrichtung zwischen Betrieb und Inversdrehung des Motors notwendig.

Weitere vorteilhafte Ausgestaltungen der Erfindung ergeben sich aus den übrigen in den Unteransprüchen angegebenen Merkmalen.

### Zeichnung

Die Erfindung wird nachfolgend in einem Ausführungsbeispiel anhand der zugehörigen Zeichnungen näher erläutert. Es zeigen:
- Figur 1: ein Ersatzschaltbild eines elektronisch kommutierten Synchronmotors;
- Figur 2: ein Beispiel einer Kommutierung des Synchronmotors bei Bestromung in Solldrehrichtung und
- Figur 3: ein Beispiel einer Kommutierung des Synchronmotors bei Abbremsen aus einer Inversdrehung.

### Beschreibung des Ausführungsbeispiels

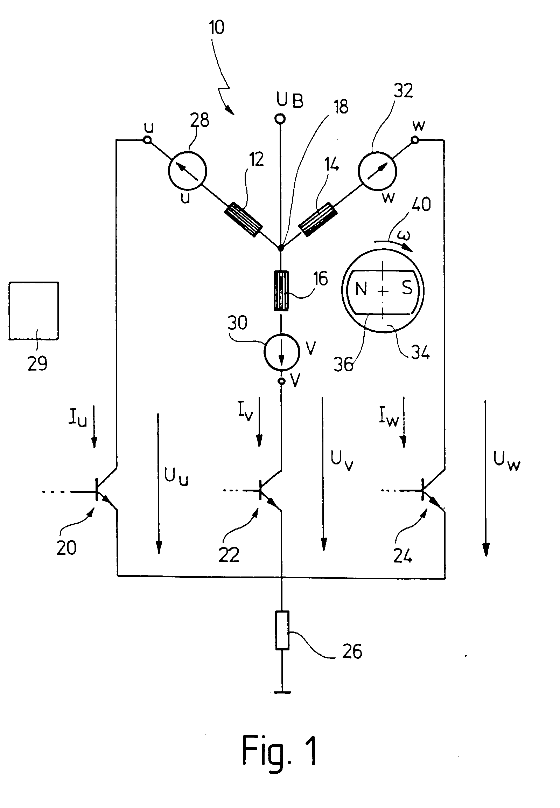

Figur 1 zeigt das Ersatzschaltbild eines allgemein mit 10 bezeichneten, elektronisch kommutierten Synchronmotors. Der Synchronmotor 10 weist in seinem nicht dargestellten Stator drei in Stern geschaltete Wicklungsstränge 12, 14 und 16 auf. Die Wicklungsstränge 12, 14 und 16 sind einerseits in einem Sternpunkt 18 und andererseits jeweils mit Anschlußklemmen u, v, w verbunden. An dem Sternpunkt 18 liegt das positive Potential einer nicht dargestellten Gleichspannungsquelle einer Betriebsspannung U_{B} an. Die Anschlußklemmen u, v, w sind jeweils über ein Schaltmittel, im gezeigten Beispiel jeweils einen Leistungstransistor 20, 22 und 24 und einen gemeinsamen Shunt-Widerstand 26, mit der Minusanschlußklemme der nicht dargestellten Gleichspannungsquelle verbunden. Die Steueranschlüsse (Gate) der Leistungstransistoren 20, 22 und 24 sind mit einer hier angedeuteten Kommutierungsvorrichtung 29 verbunden. Jedem der Wicklungsstränge 12, 14 und 16 ist weiterhin eine Spannungsmeßeinrichtung 28, 30 und 32 zugeordnet, die ebenfalls mit der Kommutierungsvorrichtung 29 verbunden sind, beziehungsweise Bestandteile dieser sind.

Der Synchronmotor 10 weist weiterhin einen hier angedeuteten Rotor 34 auf, der einen Permanentmagneten 36 trägt, wobei sich dessen Südpol S und Nordpol N diametral gegenüberliegen. Der Rotor 34 ist hier zweipolig ausgebildet, kann aber auch eine andere Polzahl aufweisen. Der in Figur 1 dargestellte Synchronmotor 10 kann beispielsweise ein in einem Kraftfahrzeug angeordneter, mit der Kraftfahrzeugbatterie als Gleichspannungsquelle verbindbarer Gebläsemotor einer Lüftung sein.

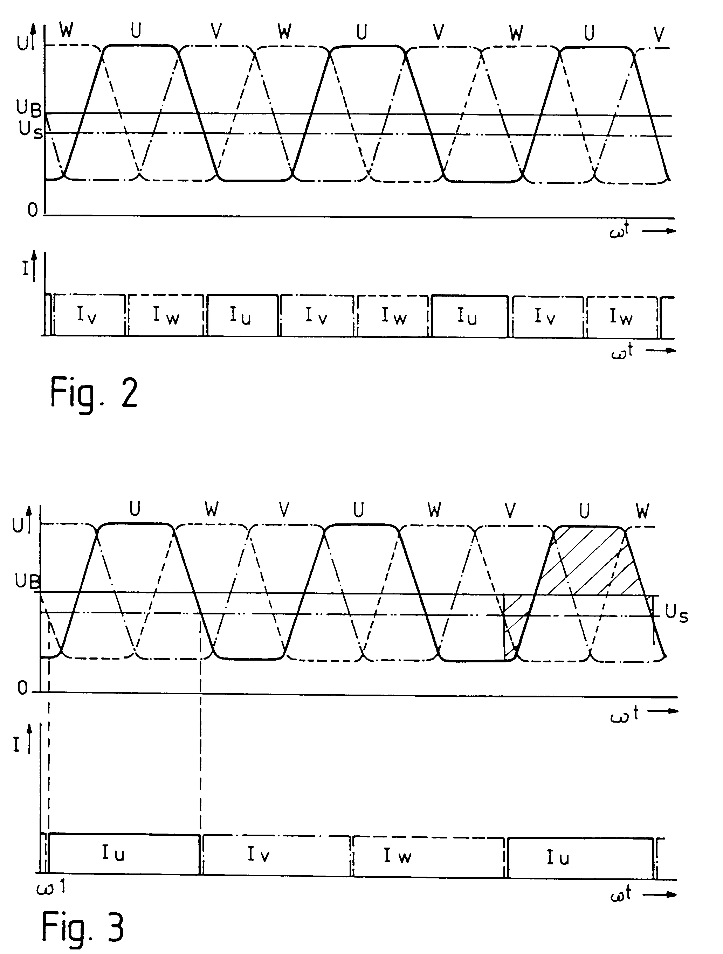

Anhand der Figur 2 soll die Funktionsweise des Synchronmotors 10 verdeutlicht werden. Indem einer der Wicklungsstränge 12, 14 oder 16 bestromt wird, das heißt, über den mit ihm in Reihe geschalteten Leistungstransistor 20, 22 oder 24 mit der Gleichspannungsquelle verbunden wird, baut sich in allgemein bekannter Weise ein Magnetfeld auf, das mit dem Magnetfeld des Rotors 34 zusammenwirkt und somit den Rotor 34 in Rotation versetzt. Bei einer im dargestellten Beispiel angenommenen Solldrehrichtung entgegen der Uhrzeigerrichtung erfolgt nacheinander jeweils abwechselnd eine Bestromung des Wicklungsstrangs 12, des Wicklungsstrangs 14 und des Wicklungsstrangs 16. Durch die Rotation des Permanentmagneten 36 wird in den Wicklungssträngen 12, 14 und 16 jeweils eine Spannung induziert, die sich über die Änderung des Drehwinkels des Rotors 34 verändert. Die induzierte Spannung wird jeweils über die Spannungsmeßeinrichtungen 28, 30 und 32 gemessen. Der sich ergebende Spannungsverlauf der gemessenen induzierten Spannungen ist in dem oberen, in Figur 2 dargestellten Diagramm verdeutlicht. Über dem elektrischen Winkel ω·t ist hier die Spannung U aufgetragen. Der elektrische Winkel ergibt sich aus dem mechanischen Winkel ϕₘ dividiert durch die Polpaarzahl p. Mit U_{B} ist die Betriebsspannung als konstanter Wert eingetragen. Mit W ist die von der Spannungsmeßeinrichtung 32 in dem Wicklungsstrang 14 gemessene induzierte Spannung bezeichnet. Mit U ist die von der Spannungsmeßeinrichtung 28 in dem Wicklungsstrang 12 induzierte Spannung bezeichnet, während mit V die von der Spannnungsmeßeinrichtung 30 in dem Wicklungsstrang 16 gemessene induzierte Spannung bezeichnet ist. Bei angenommener konstanter Drehzahl des Rotors 34 ergibt sich somit der im oberen Diagramm in Figur 2 eingezeichnete Verlauf für die induzierten Spannungen, die sich entsprechend phasenverschoben mit einer Phasenfolge U-V-W wiederholen. Der Verlauf der induzierten Spannungen in den einzelnen Wicklungssträngen wird mit einem Schwellwert U_{S} in der Kommutierungsvorrichtung 29 verglichen. Aus dem Vergleich der induzierten Spannungen U, V, W mit dem Schwellwert U_{S} werden die von der Stellung des Rotors 34 abhängigen Kommutierungsbedingungen für die Wicklungsstränge 12, 14 und 16 ermittelt. Hierzu können beispielsweise in nicht näher zu betrachtender Weise Operationsverstärker, Komparatoren, Differenzbildner, Phasenregelkreise, spannungsgesteuerte Oszillatoren und andere elektronische Bauelemente eingesetzt werden. Für einen sich in Solldrehrichtung befindenden Rotor 34, das heißt im gezeigten Beispiel in Figur 1 entgegengesetzt der Uhrzeigerrichtung drehenden Rotor 34, ergeben sich die in dem unteren Diagramm der Figur 2 dargestellten Kommutierungsbedingungen. Über dem elektrischen Winkel ω·t ist hier der Strom I aufgetragen. Für eine Bestromung des Wicklungsstrangs 16, hier mit I_{V} gekennzeichnet, muß die Bedingung erfüllt sein, daß die im Wicklungsstrang 12 und im Wicklungsstrang 16 induzierten Spannungen U und V kleiner gleich dem Schwellwert U_{S} sind. Ist diese Bedingung erfüllt, wird durch die Kommutierungsvorrichtung 29 der Steueranschluß des Leistungstransistors 22 angesteuert, so daß der Wicklungsstrang 16 mit der Gleichspannungsquelle verbunden wird. Gleichzeitig fließt über den Leistungstransistor 22 der Strom I_{V}, und die Spannung U_{V} liegt an. Der Wicklungsstrang 16 wird so lange bestromt, bis die in dem Wicklungsstrang 16 induzierte Spannung V und die in dem Wicklungsstrang 14 induzierte Spannung W kleiner gleich dem Schwellwert U_{S} sind. Über die Kommutierungsvorrichtung 29 wird der Leistungstransistor 22 so angesteuert, daß dieser öffnet und damit den Wicklungsstrang 16 von der Betriebsspannung U_{B} trennt und gleichzeitig der Steueranschluß des Leistungstransistors 24 angesteuert, so daß dieser den Wicklungsstrang 14 mit der Betriebsspannung U_{B} verbindet. Hierbei fließt der Strom I_{W}, während die Spannung U_{W} anliegt. In vollkommen analoger Weise wird der Wicklungsstrang 12 bestromt, wenn die Bedingung gegeben ist, daß die in dem Wicklungsstrang 14 induzierte Spannung W und die in dem Wicklungsstrang 12 induzierte Spannung U den Schwellwert Uₛ unterschreiten. Die Kommutierungsbedingung läßt sich als logische Verknüpfung schreiben:

Für die Kommutierung von (siehe Figur 2)
Phase W nach U: U_{V} > (U_{U} und U_{W}) ≤ U_{S}
Phase U nach V: U_{W} > (U_{V} und U_{U}) ≤ U_{S}
Phase V nach W: U_{U} > (U_{W} und U_{V}) ≤ U_{S}

Dieser Vorgang setzt sich permanent fort, solange der Synchronmotor 10 über einen nicht dargestellten Hauptschalter mit der Betriebsspannung U_{B} verbunden ist. Die Frequenz der sich ergebenden Strangströme I_{V}, I_{W} und I_{U} entspricht genau der Frequenz der in den Wicklungssträngen 12, 14 und 16 induzierten Spannungen U, V, W.

Ist der Synchronmotor 10 durch den nicht dargestellten Hauptschalter von der Gleichspannungsquelle getrennt, kann es durch äußere Einflüsse zu einer Inversdrehung, das heißt zu einer entgegengesetzt der Solldrehrichtung während des Betriebes des Synchronmotors 10 gerichteten Drehung kommen. Ist der Synchronmotor 10 beispielsweise zum Antrieb eines Gebläses eingesetzt, können schon geringste Luftströmungen auf das Lüfterrad des Gebläses zu der in Figur 1 mit dem Pfeil 40 gekennzeichneten Inversdrehung anregen. Da während der Inversdrehung des Rotors 34 gleichzeitig der Permanentmagnet 36 mitrotiert, wird in den Wicklungssträngen 12, 14 und 16 wiederum jeweils eine Spannung U, V, W induziert, die jedoch nun gegenüber der Solldrehrichtung eine veränderte Phasenfolge, nämlich U-W-V aufweist. Diese während der Inversdrehung induzierten Spannungen werden von den Spannungsmeßeinrichtungen 28, 30 und 32 gemessen und der Kommutierungsvorrichtung 29 zur Verfügung gestellt. Dieser sich ergebende Spannungsverlauf der einzelnen induzierten Spannungen ist in dem oberen Diagramm der Figur 3 über dem elektrischen Winkel ω·t aufgetragen. Soll nun der Synchronmotor 10 durch Betätigen des nicht dargestellten Hauptschalters in Betrieb genommen werden, werden zu diesem Zeitpunkt die in den Wicklungssträngen 12, 14 und 16 induzierten Spannungen U, V, W in der Kommutierungsvorrichtung 29 mit dem Schwellwert U_{S} verglichen und hieraus eine bestimmte Kommutierungsbedingung zum gezielten aktiven Abbremsen des Rotors 34 abgeleitet. Die zuvor genannte Kommutierungsbedingung gilt gleichermaßen und führt zu folgendem Ablauf. Ist die in dem Wicklungsstrang 12 induzierte Spannung U und die in dem Wicklungsstrang 14 induzierte Spannung W kleiner gleich dem Schwellwert U_{S}, erfolgt über die Kommutierungsvorrichtung 29 eine Ansteuerung des Leistungstransistors 20, so daß der Wicklungsstrang 12 mit der Betriebsspannung U_{B} verbunden, also bestromt wird. Durch die Bestromung des Wicklungsstrangs 12 zu diesem Zeitpunkt wird ein Magnetfeld aufgebaut, das dem Magnetfeld des Permanentmagneten 46 derart entgegensteht, daß dessen, und damit die des Rotors 34, inverse Drehbewegung abgebremst wird. Die auf den Rotor 34 wirkende mechanische Arbeit ergibt sich aus der Integration der induzierten Spannung und dem angelegten Strangstrom I. In Figur 3 wird verdeutlicht, daß bei Erkennen der induzierten Spannungen in den Wicklungssträngen 12, 14 und 16 zu einer Winkelstellung ω1, bei der die in dem Wicklungsstrang 14 induzierte Spannung W und die in dem Wicklungsstrang 12 induzierte Spannung U kleiner gleich dem Schwellwert U_{S} wird, der Wicklungsstrang 12 durch Schalten des Leistungstransistors 20 bestromt wird. Je nachdem, zu welchem Zeitpunkt gerade das Einschalten des Synchronmotors 10 erfolgt, werden die induzierten Spannungen U, V, W in den Wicklungssträngen 12, 14 und 16 entsprechend mit dem Schwellwert U_{S} verglichen, so daß eine Bestromung des Wicklungsstrangs 12, 14 oder 16 erfolgt. In dem unteren, in Figur 3 dargestellten Diagramm ist der Strom I über dem elektrischen Winkel ω·t aufgetragen, woraus sich die korrekten Kommutierungsbedingungen für ein aktives Bremsen des Rotors 34 bei inverser Drehrichtung ergeben. In dem oberen Diagramm ist zum Zeitpunkt der Bestromung des Wicklungsstrangs 12, also wenn der Strangstrom I_{U} fließt, die in dem Wicklungsstrang 12 induzierte Spannung U schraffiert dargestellt. Dadurch, daß während der Zeit des Fließens des Strangstroms I_{U} der Flächeninhalt der induzierten Spannung U in den Bereichen, wo diese größer ist als die Betriebsspannung U_{B}, größer ist, als der Flächeninhalt, indem die induzierte Spannung U kleiner ist als die Betriebsspannung U_{B}, ergibt sich ein Bremsmoment für den invers drehenden Rotor 34. Damit diese Bedingung erfüllt ist, werden die Wicklungsstränge 12, 14 oder 16 über einen Winkel von 240°, bezogen auf eine Vollwelle von 360° der induzierten Spannungen U, V, W, in den Wicklungssträngen 12, 14 oder 16 bestromt. Hierdurch wird erreicht, daß die Fläche der induzierten Spannung über der Betriebsspannung U_{B} immer größer ist als die Fläche der induzierten Spannung unter der Betriebsspannung U_{B} und somit eine Bremswirkung sicher erreicht wird. Die Frequenz der Strangströme I beträgt somit die Hälfte der induzierten Spannungen U, V, W in den Wicklungssträngen 12, 14 und 16. Nachdem der Rotor 34 aus seiner Inversdrehung abgebremst wurde und der theoretische Punkt des Stillstandes erreicht wird, wechselt die Kommutierungsvorrichtung 29 auf die in Figur 2 dargestellte Kommutierungsbedingung, so daß ein drehrichtiges Hochfahren des Synchronmotors 10 erfolgen kann. Durch das hier dargestellte Verfahren kann ein aktives Abbremsen eines invers drehenden Rotors 34 aus jeder beliebigen Stellung des Rotors 34 erfolgen, indem über eine Auswertung der durch die Inversdrehung in den Wicklungssträngen 12, 14 und 16 induzierten Spannungen U, V, W die Bedingungen für eine Bestromung der Wicklungsstränge 12, 14 und 16 abgeleitet werden. Somit wird insgesamt ohne zusätzliche Bauelemente und ohne eine wesentliche Belastung der Gleichspannungsquelle ein gezieltes Abbremsen und anschließendes drehrichtiges Hochlaufen des Synchronmotors 10 möglich.

Die Erfindung beschränkt sich nicht auf das vorstehend beschriebene Ausführungsbeispiel. Insbesondere unterliegt die Anzahl der Wicklungsstränge keiner Einschränkung.

## Patentansprüche

1. Verfahren zum Bremsen eines invers drehenden, an einem Gleichspannungsnetz betriebenen Mehrphasen-Synchronmotors (10), dessen Wicklungsstränge (12, 14, 16) über Schaltmittel, die von einer Kommutierungsvorrichtung angesteuert werden, folgerichtig mit einer Gleichspannungsquelle verbindbar sind, **dadurch gekennzeichnet,** daß eine während der Inversdrehung des Rotors (34) in den Wicklungssträngen (12, 14, 16) des Stators induzierte Spannung (U, V, W) mit einem Schwellwert (U_{S}) verglichen wird und in Abhängigkeit des Vergleichs eine definierte Bestromung der Wicklungsstränge (12, 14, 16) erfolgt.

2. Verfahren nach Anspruch 1, **dadurch gekennzeichnet**, daß eine Kommutierungsschaltung und die Kommutierungsbedingungen für einen Korrektlauf und den Inverslauf identisch sind.

3. Verfahren nach einem der vorhergehenden Ansprüche, **dadurch gekennzeichnet**, daß der Vergleich mit dem Schwellwert (U_{S}) zu einem Drehwinkel ω1 erfolgt, zu dem der Synchronmotor (10) eingeschaltet wird.

4. Verfahren nach einem der vorhergehenden Ansprüche, **dadurch gekennzeichnet**, daß die den Schwellwert (U_{S}) unterschreitende induzierte Spannung (U, V, W) in der Kommutierungsvorrichtung (29) in auswertbare Positionssignale des Rotors (34) umgewandelt wird.

5. Verfahren nach einem der vorhergehenden Ansprüche, **dadurch gekennzeichnet**, daß die Positionssignale zum Ansteuern der Schaltmittel (20, 22, 24), die die Wicklungsstränge (12, 14, 16) mit einer Betriebsspannung (U_{B}) verbinden, eingesetzt werden.

6. Verfahren nach einem der vorhergehenden Ansprüche, **dadurch gekennzeichnet**, daß der Wicklungsstrang (12, 14, 16) mit der Betriebsspannung (U_{B}) verbunden wird, der dem Wicklungsstrang (12, 14, 16) in Inversdrehrichtung nacheilt, dessen induzierte Spannung (U, V, W) gerade den Schwellwert (U_{S}) unterschritten hat.

7. Verfahren nach einem der vorhergehenden Ansprüche, **dadurch gekennzeichnet**, daß der Wicklungsstrang (12, 14, 16) mit einer Frequenz bestromt wird, die der Hälfte der induzierten Spannung (U, V, W) in den Wicklungssträngen (12, 14, 16) entspricht.

8. Verfahren nach einem der vorhergehenden Ansprüche, **dadurch gekennzeichnet**, daß die Bestromung der Wicklungsstränge (12, 14, 16) über einen Winkel von 240°, bezogen auf eine Vollwelle der induzierten Spannungen (U, V, W), aufrechterhalten wird.

9. Verfahren nach einem der vorhergehenden Ansprüche, **dadurch gekennzeichnet,** daß nach Unterschreiten des Schwellwertes (U_{S}) durch die induzierte Spannung (U, V, W) des bestromten Wicklungsstranges (12, 14, 16) die Kommutierungsvorrichtung (29) auf normale Kommutierung umgeschaltet wird.

## Claims

1. Method for braking an inversely rotating polyphase synchronous motor (10) which is operated on a dc network and whose phase windings (12, 14, 16) can be connected in correct sequence to a dc source via switching means which are driven by a commutation device, characterized in that a voltage (U, V, W) induced in the phase windings (12, 14, 16) of the stator during the inverse rotation of the rotor (34) is compared with a threshold value (U_{S}), and a defined current is applied to the phase windings (12, 14, 16) as a function of the comparison.

2. Method according to Claim 1, characterized in that a commutation circuit and the commutation conditions for correct running and the inverse running are identical.

3. Method according to one of the preceding claims, characterized in that the comparison with the threshold value (U_{S}) is performed in relation to an angle of rotation ω1 at which the synchronous motor (10) is switched on.

4. Method according to one of the preceding claims, characterized in that the induced voltage (U, V, W) undershooting the threshold value (U_{S}) is converted in the commutation device (29) into position signals of the rotor (24) which can be evaluated.

5. Method according to one of the preceding claims, characterized in that the position signals are used to drive the switching means (20, 22, 24) which connect the phase windings (12, 14, 16) to an operating voltage (U_{B}).

6. Method according to one of the preceding claims, characterized in that connected to the operating voltage (U_{B}) is the phase winding (12, 14, 16) which, in inverse rotation, lags behind the phase winding (12, 14, 16) whose induced voltage (U, V, W) has just undershot the threshold value (U_{S}).

7. Method according to one of the preceding claims, characterized in that there is applied to the phase winding (12, 14, 16) a current with a frequency which corresponds to half the induced voltage (U, V, W) in the phase windings (12, 14, 16).

8. Method according to one of the preceding claims, characterized in that the flow of current through the phase windings (12, 14, 16) is maintained over an angle of 240° referred to a full wave of the induced voltages (U, V, W).

9. Method according to one of the preceding claims, characterized in that after undershooting the threshold value (U_{S}) by the induced voltage (U, V, W) of the phase winding (12, 14, 16) through which current flows, the commutation device (29) is switched over to normal commutation.

## Revendications

1. Procédé de freinage d'un moteur synchrone (10)polyphasé tournant en sens inverse, alimenté par un réseau de tension continue, et dont les enroulements (12, 14, 16) sont commandés par un dispositif de commutation pour être reliés selon un ordre correct à une source de tension continue,
caractérisé en ce qu'
une tension (U, V, W) induite dans les enroulements (12, 14, 16) du stator pendant la rotation inverse du rotor (34) est comparée à un seuil (U_{S}) et en fonction de la comparaison les enroulements (12, 14, 16) sont alimentés de manière déterminée.

2. Procédé selon la revendication 1,
caractérisé en ce que
le circuit de commutation et les conditions de commutation sont les mêmes pour le fonctionnement normal et le fonctionnement en sens inverse.

3. Procédé selon l'une des revendications précédentes,
caractérisé en ce que
la comparaison au seuil (U_{S}) se fait pour un angle de rotation ω1 pour lequel on branche le moteur synchrone (10).

4. Procédé selon l'une des revendications précédentes,
caractérisé en ce que
la tension (U, V, W) induite, dépassant vers le bas le seuil (U_{S}) est transformée dans le dispositif de commutation (29) en des signaux de position exploitables du rotor (34).

5. Procédé selon l'une des revendications précédentes,
caractérisé en ce que
les signaux de position sont utilisés pour commander les moyens de commutation (20, 22, 24) qui relient les enroulements (12, 14, 16) à une tension de fonctionnement (U_{B}).

6. Procédé selon l'une des revendications précédentes,
caractérisé en ce que
l'enroulement (12, 14, 16) qui est en aval de l'enroulement (12, 14, 16) dans le sens de rotation inverse, dont la tension induite (U, V, W) vient de dépasser le seuil (U_{S}) est reliée à la tension de fonctionnement (U_{B}).

7. Procédé selon l'une des revendications précédentes,
caractérisé en ce que
l'enroulement (12, 14, 16) est alimenté à une fréquence qui correspond à la moitié de la tension induite (U, V, W) dans les enroulements (12, 14, 16).

8. Procédé selon l'une des revendications précédentes,
caractérisé en ce que
l'alimentation des enroulements (12, 14, 16) est maintenue sur un angle de 240° rapporté à une onde totale des tensions induites (U, V, W).

9. Procédé selon l'une des revendications précédentes,
caractérisé en ce qu'
après dépassement vers le bas du seuil (U_{S}) par la tension induite (U, V, W) de l'enroulement (12, 14, 16) alimenté, le dispositif de commutation (29) commute sur la commutation normale.
